# EUROPÄISCHE PATENTSCHRIFT

(11) **EP 3 064 845 B1**
(45) Veröffentlichungstag und Bekanntmachung des Hinweises auf die Patenterteilung: **06.01.2021**
(21) Anmeldenummer: 16154163.6
(22) Anmeldetag: 04.02.2016
(51) Int. Cl.: F24F 11/30, F24F 110/50, F24F 110/70, F24F 11/00

(54) **STEUERGERÄT**
CONTROL UNIT
UNITÉ DE COMMANDE

(30) Priorität: 06.03.2015 DE 202015001802 U
(43) Veröffentlichungstag der Anmeldung: 07.09.2016
(73) Patentinhaber: SIEGENIA-AUBI KG, 57234 Wilnsdorf (DE)
(72) Erfinder: FRANK, Wieland, 57234 Wilnsdorf (DE)

(56) Entgegenhaltungen:
- WO-A1-2014/125805
- DE-U1- 29 610 709
- DE-U1-202007 016 687
- JP-A- 2000 081 240
- KR-A- 20140 047 851
- US-A1- 2012 061 480
- US-A1- 2014 277 769

## Beschreibung

Die Erfindung betrifft ein Steuersystem beinhaltend ein Steuergerät mit integrierten Sensoren zur Erfassung von Raumluftqualität, zur Ansteuerung von Be- und/oder Entlüftungsgeräten.

Ein Steuersystem ist aus der US 20120061480 A1 bereits bekannt. Das Steuersystem umfasst eine Basisstation mit Temperatur-Sensoren und ein damit mechanisch koppelbares sowie signaltechnisch verbundenes mobiles Anzeige- und Bediengerät, welches zur Bedienung der Basisstation dient und ebenfalls Sensoren beinhaltet. Nachteilig ist, dass die Erfassung der Sensoren auf den Ort beschränkt ist, an dem sich das Steuergerät oder das Bediengerät befindet.

Es ist bereits bekannt, Be- und/oder Entlüftungsgeräte mit Sensoren auszustatten und den Betrieb der Be- und/oder Entlüftungsgeräte in Abhängigkeit der von den Sensoren ermittelten Werte zu steuern. Aus der DE 19855056 A1 ist ein Gerätesystem bekannt geworden, welches Be- und/oder Entlüftungsgeräte sowie ein mobiles Bedienteil vorsieht. Mit dem mobilen Bedienteil kann die Wirkung der Be- und/oder Entlüftungsgeräte individuell beeinflusst werden. Nachteilig dabei ist es, dass über das Bedienteil die individuellen Empfindungen des jeweiligen Bedieners zu Betätigungen der Be- und/oder Entlüftungsgeräte führen. Dies verbraucht unnötige Energie, da die Be- und/oder Entlüftungsgeräte zur Erreichung der neuen Einstellungen jeweils Zeit und Energie benötigen.

Bekannt ist auch eine Wetterstation "netatmo", die im Internet unter www.netatmo.com beworben wird und zwei externe Sensoren für die Erfassung von Wetter- und Luftdaten bereitstellt. Diese Daten werden gebäudeaußenseitig und gebäudeinnenseitig erfasst, und drahtlos einer mobilen Computereinheit (Tablet oder Smartphone) bereitgestellt und von einer Anwendung aufgearbeitet. Diese wertet die Daten hinsichtlich eines erforderlichen und sinnvollen Lüftens aus und gibt dem Anwender einen entsprechenden Hinweis, dies manuell vorzunehmen.

Aus der DE 4142122 A1 ist ein Verfahren bekannt, welches zur Steuerung einer raumlufttechnischen Anlage dient. Innerhalb des Verfahrens werden verschiedenste Einflussgrößen ausgewertet und mit individuellen Sollwerten zwecks Nachregelung verglichen.

Die DE 102008050444 B4 hat ein Verfahren zur Belüftung eines Raumes in einem Gebäude zum Gegenstand. Dabei ist das Verfahren auf eine Volumenstromsteuerung ausgerichtet, die neben einem raumlüftungsspezifischen Grundlüftungsanteil einen variablen personenabhängigen Lüftungsanteil berücksichtigt. Dazu wird über Sensoren die Anzahl der im Raum anwesenden Personen ermittelt und ein dazu analoger Volumenstrom eingestellt.

Nachteilig bei den letztgenannten Ausgestaltungen ist es, dass die verwendeten Sensoren ortsfest angebracht sind und daher die tatsächlichen Temperatur und Luftverhältnisse an dem Aufenthaltsort der anwesenden Personen nicht feststellen können. Insbesondere durch elektrische Geräte und im Raum befindliche Möbelstücke und Einrichtungen kann es innerhalb des Raumes zu unterschiedlichen Temperaturzonen kommen. Zudem schränken fest installierte Sensoren die Anordnung der Einrichtung im Raum ein.

Aus der JP2000081240A geht eine Fernbedienung für eine Lüftungsvorrichtung hervor, die einen eigenen Lüftungskanal mit einem Luftförderelement ausbildet und innerhalb dieses Lüftungskanals Sensoren zur Luftqualität beinhaltet. Der Betrieb des Luftförderelementes in Form eines Ventilators verbessert die Messung der Luftqualität an dem Punkt der Messung, nicht aber eines ganzen Gebäudes oder eines großen Raumes, bei dem Möbel die Luftbewegung einschränken. Außerdem ist der Betrieb des Ventilators mit Energieverlusten und Geräuschen verbunden.

Die WO 2014/125805 A1 offenbart ein Betätigungsgerät und ein Belüftungssystem, bei dem zumindest ein im Gebäude angebrachter Innentemperatursensor und ein außerhalb des Gebäudes angebrachter Temperatursensor vorgesehen ist und zur Ansteuerung verschiedener Belüftungssysteme ausgewertet werden können. Daneben können weitere Sensoren zum Gebäude und Besucher herangezogen werden. Die tatsächlich im Gebäude vorliegende Raumluftqualität wird aber nur an einem einzigen Punkt stationär gemessen. Ist der ausgewählte Messpunkt falsch gewählt, dann reguliert das System nicht korrekt.

Aufgabe der Erfindung ist es daher, den Nachteil des Standes der Technik zu beseitigen. Dazu sieht die Erfindung vor, dass das Steuergerät ein Repeater für Dahtlosdatenprotokolle wie beispielsweise WLAN ist, der in eine vorhandene WLAN-Architektur einbindbar ist und die Anzahl der mobilen Netzwerkgeräte in seiner unmittelbaren Umgebung erfassen kann. Hierbei sind weitere Drahtlosdatenprotokolle denkbar, wobei jedes Steuergerät auch eine Transformation verschiedener Protokolle vorsieht, beispielsweise spezifische Steuerdaten einer Heizungssteuerung einerseits, sowie WLAN und Bluetooth andererseits. Dazu ist es zweckmäßig, dass Steuergeräte verschiedener Räume miteinander kommunizieren. Dadurch wird die Installation weiterer Elemente vermieden.

Es ist dadurch möglich ein flexibleres Steuersystem bereitzustellen, dass von jedem Ort des Raumes aus zu bedienen ist und gleichzeitig die Istwerte an exakt dem Aufenthaltspunkt mit den Sollwerten zu vergleichen. Die dadurch erreichte Genauigkeit führt zu einem gezielten Einsatz der Be- und/oder Entlüftungsgeräte, der Betriebsgeräusche und Energieverbrauch auf das erforderliche Minimum senkt. Dazu trägt auch bei, dass im Raum, insbesondere an Orten an denen sich Personen aufhalten, angebrachte weitere Sensoren dem Steuergerät zuordenbar sind, so dass geöffnete Fenster und Türen erfasst werden.

Um das Verlegen ortsfester Infrastruktur auf ein Minimum zu reduzieren ist vorgesehen, dass die Be- und/oder Entlüftungsgeräte drahtlos angesprochen werden.

Um die erforderliche Wirkung der Be- und/oder Entlüftungsgeräte dosieren zu können ist vorgesehen, dass ein Protokollspeicher integriert ist, der ausgehend von einem erfassten Referenzwert zu einem ersten Zeitpunkt die Wirkung der verfügbaren Be- und/oder Entlüftungsgeräte bis zu einem zweiten Zeitpunkt erfassen kann.

Von besonderem Vorteil ist eine Ausgestaltung, bei der in dem Protokollspeicher auch externe Daten über Wetter- und Temperaturverhältnisse einfließen und zur vorausschauenden Steuerung der Be- und/oder Entlüftungsgeräte herangezogen werden.

Dabei kann dadurch, dass die erfassten Protokolle zur Steuerung der Be- und und/oder Entlüftungsgeräte bei erwarteten ähnlichen Wetter- und Temperaturverhältnissen und sich dabei ergebender Luftqualität im Bereich des Steuergerätes herangezogen werden, ein energiesparender Betrieb sichergestellt werden.

Um die Energieversorgung sicherzustellen ist eine Kopplungseinrichtung für eine Lade-Dockingstation vorgesehen.

Dabei kann idealerweise die Dockingstation Teil einer der Be- und/oder Entlüftungsgeräte sein. Mit Vorteil hat das Steuergerät einen Speicher zur dauerhaften Hinterlegung seiner Anordnung im Raum, so dass manuell oder drahtlos verschiedene Standorte des Steuergerätes gespeichert werden können, um eine für den jeweiligen Standort passende Steuerung zu gewährleisten. Be- und/oder Entlüftungsgeräte im Sinne dieser Erfindung sind Lüftungsgeräte oder öffnen bare Gebäudeöffnungen wie Fenster, Türen, Klappen oder Ähnliches.

Die Erfindung sieht demnach ein Steuergerät vor, welches mit integrierten Sensoren zur Erfassung der Raumluftqualität, welches zur Ansteuerung von Be- und/oder Entlüftungsgeräten geeignet ist, wobei das Steuergerät als mobiles Raumsteuergerät mit den Be- und/oder Entlüftungsgeräten verbunden ist. Das Steuergerät ist daher mobil und besitzt integrierte Sensoren zur Erfassung der Raumluftqualität. So kann das Steuergerät beispielsweise auf einem Tisch platziert werden, der in der Raummitte angeordnet ist und damit entfernt zu einem Fenster, welches mit einem motorischen Antrieb in eine Lüftungsstellung bringbar ist. Das Steuergerät umfasst einen Temperatursensor und einen C02-Sensor. Stellt das Steuergerät fest, dass die Ist-Temperatur der Soll-Temperatur entspricht, aber der C02-Gehalt der Raumluft sich einem Grenzwert nähert, dann vergleicht das Steuergerät die Innentemperatur mit der Außentemperatur, die über einen Sensor am Fenster ermittelt wird und erfasst die Verschlussstellung des Fensters. Ist das Fenster geschlossen und die Außen- und Innentemperaturen sind ähnlich, dann veranlasst das Steuergerät über den motorischen Antrieb des Fensters eine Lüftungsstellung. Bestehen die Be- und/oder Entlüftungsgeräte aus Druckdifferenzlüftungsgeräten mit motorischen Verschlusselementen, werden diese geöffnet. Es kann dabei auch zweckmäßig sein im Zuge einer Kreuzlüftung Verschlusselemente zu anderen Räumen zu öffnen um eine Gebäudedurchströmung zu erreichen.

Um dabei das individuelle Empfinden der Benutzer berücksichtigen zu können und gleichzeitig gebäudeschützende Maßnahmen ergreifen zu können sind im Raum, insbesondere an Orten an denen sich Personen aufhalten, angebrachte weitere Sensoren dem Steuergerät zuordenbar. Diese können beispielsweise an oder oberhalb von Beleuchtungseinrichtungen angebracht sein, die infolge ihrer Wärmeentwicklung und damit verbundener Thermik zu einer Konzentration von Schadstoffen führen. Es kann dadurch zu einem Vorlauf der Be- und/oder Entlüftungsgeräte kommen, bevor die Luftqualität am Standort des mobilen Steuergerätes in einen reglungsbedürftigen Zustand gerät.

Bei alledem ist der Installationsaufwand dadurch verringert, dass die Be- und/oder Entlüftungsgeräte drahtlos angesprochen werden. Zweckmäßigerweise ist das Steuergerät ein Repeater für Dahtlosdatenprotokolle, der zu einer Erweiterung des Funknetzes beiträgt und der in eine vorhandene WLAN-Architektur eingebunden ist. Als solcher kann er die Anzahl der mobilen Netzwerkgeräte in seiner unmittelbaren Umgebung erfassen. Die Anzahl der Netzwerkgeräte gibt Aufschluss über die Anzahl der Personen, die sich im Raum aufhalten und ggf. mit den WLAN verbunden werden. Der Lüftungsbedarf ist linear zur Anzahl der Personen. Zudem lassen sich die Steuersignale in einfacher Weise über das WLAN versenden, wenn die Be- und/oder Entlüftungsgeräte ebenfalls WLAN-Empfänger und Teilnehmer sind. Schließlich sind Applikationen auf den mobilen Netzwerkgeräten auch in der Lage Ist- und Sollwerte der Sensoren des Steuergerätes anzuzeigen und - entsprechende Berechtigungen vorausgesetzt, zu verändern. Dazu ist das Steuergerät mit einem Berechtigungskonzept ausgestattet, welches einerseits den Zugang und andererseits den Umfang der möglichen Einstellungen und Aktionen begrenzt. So ist eine Manipulation der Be- und/oder Entlüftungsgeräte durch einen Dritten von außen nicht möglich.

Die Steuergeräte verschiedener Räume sind miteinander drahtlos verbunden, was für die flächendeckende Versorgung der Drahtlosdatenprotokolle, aber auch für die Steuerung der Be- und Entlüftungsgeräte von Vorteil ist, deren Wirkung so aufeinander abgestimmt werden. Auf diese Weise lassen sich auf Druckdifferenz basierende Lüftungsvorrichtungen an einer Fassade als Zuluftgeräte nutzen, wenn hier ein entsprechender Druck an der Fassade feststellbar ist und gleichzeitig die Lüftungsgeräte an der gegenüberliegenden Gebäudeseite als Abluftgeräte nutzen, so dass eine Kreuzlüftung des Gebäudes erreicht wird. Sind gebäudeinnenseitig weitere Be- oder Entlüftungsvorrichtungen wirksam, wie Badentlüftungen oder Küchenabzugshauben, so wird durch eine Zuluftregelung deren Wirksamkeit erhöht.

Die Vernetzung der Steuergeräte erlaubt auch den Transport von Alarminformationen über Einbruch oder Feuer in jeden Raum und jedes damit in Verbindung stehende Gerät.

Zugriffe auf das Steuergerät werden in einem Protokollspeicher gespeichert. Dieser ist im Steuergerät integriert und dient neben der Aufzeichnung von Benutzeraktionen auch dazu, die Wirksamkeit der Be- und/oder Entlüftungsgeräte zu erfassen. Dazu wird ausgehend von einem erfassten Referenzwert zu einem ersten Zeitpunkt die Wirkung der verfügbaren Be- und/oder Entlüftungsgeräte bis zu einem zweiten Zeitpunkt erfasst. Dies kann dergestalt erfolgen, dass alle Be- und/oder Entlüftungsgeräte in einem Teaching -oder Testmodus auf maximale Wirkung eingestellt werden, und in zyklischen Abständen die Sensoren die Wirksamkeit messen. Dieser Teaching-Modus gibt zum einen Aufschluss über die Kapazität der Be- und/oder Entlüftungsgeräte und kann daher auch zu deren Wartung herangezogen werden. Zum anderen kann dadurch der Einfluss von Maßnahmen wie das Neuanordnen von Möbeln ausgewertet werden.

Schließlich gestattet der Protokollspeicher auch das Speichern von externen Daten über Wetter- und Temperaturverhältnisse, wie diese beispielsweise durch Dienstleister via Internet bereitgestellt werden. Diese lokalen Wetterinformationen erlauben es einen Zusammenhang zwischen der Wetterlage einerseits und der Raumluftqualität andererseits herzustellen, so dass die Wirksamkeit von Lüftungsmaßnahmen bei einer vorherrschenden Windrichtung am Gebäudestandort vorhersehbar wird. Um den Personen im Raum bereits bei deren Eintreffen ein Höchstmaß an Komfort im Hinblick auf die Raumluftqualität zu gewährleisten ist vorgesehen, dass die erfassten Protokolle zur Steuerung der Be- und und/oder Entlüftungsgeräte bei erwarteten ähnlichen Wetter- und Temperaturverhältnissen und sich dabei ergebender Luftqualität im Bereich des Steuergerätes herangezogen werden. Dadurch wird bei einem zu erwartenden sonnigen Tag nach Wetterbericht, bereits frühzeitig mit einer Durchlüftung des Raumes, insbesondere in den kühleren Morgenstunden begonnen.

Dabei ist das Steuergerät auch in der Lage externe Warnmeldungen über Medien der sozialen Netzwerke oder Radio auszuwerten. Werden Warnhinweise über Brände im Umfeld des Gebäudes verbreitet, dann bricht das Steuergerät laufende Belüftungsvorgänge ab, damit keine gefährliche Gase oder Gerüche ins Gebäude gelangen. An dem Steuergerät ist eine Kopplungseinrichtung für eine Lade- Dockingstation vorgesehen, um die Energieversorgung im mobilen Betrieb zu gewährleisten. Diese Dockingstation ist Teil einer der Be- und/oder Entlüftungsgeräte mit Stromversorgung, um den Verdrahtungsaufwand zu reduzieren. zweckmäßig ist dabei, dass das Steuergerät in seinem Zustand an der Dockingstation nur die für diesen Standort geltenden Ist- und Sollwerte zur Steuerung heranzieht, da diese von den Ist- und Sollwerten an einem anderen Standort erheblich abweichen können.

Dazu hat das Steuergerät einen Speicher zur dauerhaften Hinterlegung seiner Anordnung im Raum. Dies erfolgt im einfachsten Fall durch einen manuell zu betätigenden Auswahlschalter, der verschiedenen Positionen im Raum kennzeichnet. Dies kann aber auch durch Kontakte der Dockingstation erfolgen oder kontaktlos beispielsweise durch NFC-Elemente, die mit dem Steuergerät und dessen Lagen im Raum oder sogar im Gebäude kommunizieren. Dadurch lässt sich ein Steuergerät einer Vielzahl von Räumen zuordnen und spricht zumindest die in diesem Raum angeordneten Be- und/oder Entlüftungsgeräte an.

## Patentansprüche

1. Steuersystem zur Ansteuerung von Be- und/oder Entlüftungsgeräten, beinhaltend ein Steuergerät, welches als mobiles Raumsteuergerät mit den Be- und/oder Entlüftungsgeräten verbindbar ist, und Sensoren zur Erfassung der Raumluftqualität umfasst,
wobei das Steuersystem weitere Sensoren beinhaltet, die dazu geeignet sind, im Raum angebracht zu werden,
wobei im Raum, insbesondere an Orten an denen sich Personen aufhalten, die weiteren Sensoren dem Steuergerät zuordenbar sind, wobei das Steuergerät ein Repeater für Datenübermittlungsprotokolle ist, der in eine vorhandene Drahtlosdaten-Architektur einbindbar ist und die Anzahl der mobilen Netzwerkgeräte in seiner unmittelbaren Umgebung erfassen kann

2. Steuergerät nach Anspruch 1, **dadurch gekennzeichnet, dass** die Be- und/oder Entlüftungsgeräte drahtlos angesprochen werden.

3. Steuergerät nach einem der Ansprüche 1 oder 2, **dadurch gekennzeichnet, dass** ein Protokollspeicher integriert ist, der ausgehend von einem erfassten Referenzwert zu einem ersten Zeitpunkt die Wirkung der verfügbaren Be- und/oder Entlüftungsgeräte bis zu einem zweiten Zeitpunkt erfassen kann.

4. Steuergerät nach Anspruch 3, **dadurch gekennzeichnet, dass** in dem Protokollspeicher auch externe Daten über Wetter- und Temperaturverhältnisse einfließen.

5. Steuergerät nach Anspruch 4, **dadurch gekennzeichnet, dass** die erfassten Protokolle zur Steuerung der Be- und und/oder Entlüftungsgeräte bei erwarteten ähnlichen Wetter- und Temperaturverhältnissen und sich dabei ergebender Luftqualität im Bereich des Steuergerätes herangezogen werden.

6. Steuergerät nach einem der Ansprüche 1 bis 5, **dadurch gekennzeichnet, dass** eine Kopplungseinrichtung für eine Lade- Dockingstation vorgesehen ist.

7. Steuergerät nach Anspruch 6, **dadurch gekennzeichnet, dass** die Dockingstation Teil einer der Be- und/oder Entlüftungsgeräte ist.

8. Steuergerät nach Anspruch 1, **dadurch gekennzeichnet, dass** das Steuergerät einen Speicher zur dauerhaften Hinterlegung seiner Anordnung im Raum hat.

## Claims

1. Control system for the actuation of ventilation and/or air extraction devices, containing a control unit, which as a mobile room control unit can be connected to the ventilation and/or air extraction devices, and further sensors for detecting the room air quality, wherein the control system contains sensors which are suitable for being located in the room,
wherein, in the room, in particular at places in which persons are present, the further sensors can be assigned to the control unit,
**characterized in that**,
the control unit is a repeater for data transfer protocols, which can be integrated into an existing wireless data architecture, and can detect the number of the mobile network devices in its immediate vicinity.

2. Control unit according to claim 1, **characterized in that** the ventilation and/or air extraction devices are wireless actuated.

3. Control unit according to any one of claims1 or 2, **characterized in that** a protocol memory store is integrated, which, starting from a detected reference value, at a first point of time, can detect the effectiveness of the available ventilation and/or air extraction devices up to a second point of time.

4. Control unit according to claim 3, **characterized in that** external data regarding weather and temperature conditions also flow into the protocol memory.

5. Control unit according to claim 4, **characterized in that** the detected protocols for controlling the ventilation and/or air extraction devices can be drawn on in the event of anticipated similar weather and temperature conditions, and the air quality which then derives in the region of the control unit.

6. Control unit according to any one of claims1 to 5, **characterized in that** a coupling device is provided for a loading-docking station.

7. Control unit according to claim 6, **characterized in that** the docking station is a part of one of the ventilation and/or air extraction devices.

8. Control unit according to claim 1, **characterized in that** the control unit has a memory store for the long-term recording of its arrangement in the room.

## Revendications

1. Système de commande destiné à actionner des appareils de ventilation et/ou d'aération, contenant une unité de commande qui peut être reliée aux appareils de ventilation et/ou d'aération sous la forme d'une unité de commande mobile d'une pièce et comprend d'autres capteurs pour enregistrer la qualité de l'air ambiant,
dans laquelle le système de commande contient des capteurs qui sont appropriés à être appliqués dans la pièce,
dans laquelle dans la pièce, en particulier sur les sites où des personnes se trouvent, les autres capteurs doivent être associés à l'unité de commande,
**caractérisée en ce que**
l'unité de commande est un répéteur pour des protocoles de transmission de données, lequel peut être intégré dans une architecture de données sans fil présente et peut enregistrer la quantité d'unités en réseau mobiles dans son environnement immédiat.

2. Unité de commande selon la revendication 1, **caractérisée en ce que** les appareils de ventilation et/ou d'aération fonctionnent sans fil.

3. Unité de commande selon une des revendications 1 ou 2, **caractérisée en ce qu'**une mémoire de protocoles est intégrée et, à partir d'une valeur de référence enregistrée à un premier moment, l'action des appareils de ventilation et/ou d'aération disponibles jusqu'à un second temps peut être enregistrée.

4. Unité de commande selon la revendication 3, **caractérisée en ce que**, dans la mémoire de protocoles, affluent également des donnés externes relatives aux conditions météorologiques et de températures.

5. Unité de commande selon la revendication 4, **caractérisée en ce que** les protocoles enregistrés pour la commande des appareils de ventilation et/ou d'aération sont rapprochés en cas de conditions météorologiques et de températures similaires attendues et de la qualité de l'air qui en découle au niveau de l'unité de commande.

6. Unité de commande selon une des revendications 1 à 5, **caractérisée en ce qu'**un dispositif de couplage est présent pour une station d'accueil de charge.

7. Unité de commande selon la revendication 6, **caractérisée en ce que** la station d'accueil fait partie d'un des appareils de ventilation et/ou d'aération.

8. Unité de commande selon la revendication 1, **caractérisée en ce que** l'unité de commande a une mémoire pour consigner de manière durable son implantation dans la pièce.
